# EUROPEAN PATENT APPLICATION

(11) **EP 2 922 304 A1**
(43) Date of publication of application: **23.09.2015**
(21) Application number: 13854370.7
(22) Date of filing: 01.11.2013
(51) Int. Cl.: H04N 21/435, H04N 21/436

(54) **INFORMATION PROCESSING DEVICE, INFORMATION PROCESSING METHOD, AND PROGRAM**

(30) Priority: 14.11.2012 US 201261726416 P
(71) Applicant: Sony Corporation, Tokyo 108-0075 (JP)
(72) Inventor: YAMAGISHI Yasuaki, Tokyo 108-0075 (JP)
(74) Representative: Witte, Weller & Partner Patentanwälte mbB
(86) International application number: PCT/JP2013/079734
(87) International publication number: WO 2014/077141

(57) **Abstract**

The present disclosure relates to an information processing apparatus, an information processing method, and a program capable of suggesting a standard protocol on a home network using ACR service. An information processing method according to an aspect of the present disclosure includes a disclosing step of causing a content playback apparatus to disclose a command with which a terminal apparatus operates an identification request processing unit, an obtaining calling step of causing the terminal apparatus to obtain and call the command disclosed by the content playback apparatus, a transfer step of causing the content playback apparatus to operate the identification request unit in response to calling of the command by the terminal apparatus, and transfer the response to the terminal apparatus, and a step of causing the terminal apparatus to receive the transferred response, and obtain and execute a synchronized application, which is to be executed in accordance with progress of the content, on the basis of related meta data corresponding to the identified content, included in the response. The present disclosure can be applied to a home network system using ACR service.

## Description

### TECHNICAL FIELD

The present disclosure relates to an information processing apparatus, an information processing method, and a program, and more particularly, to an information processing apparatus, an information processing method, and a program suitable for use with a case where information about an implemented ACR (Automatic Content Recognition) client is notified between electronic apparatuses constituting a home network.

### BACKGROUND ART

For example, suppose that information about a TV program (hereinafter simply referred to as a program) on broadcast (e.g., performers, a summary, a preview of a next episode, and the like), information that is not directly related to the program but is useful for the viewers (news, weather forecast, traffic information, and the like) and the like is displayed on a screen for viewers of a TV (television) program.

In order to achieve this, a command for obtaining and activating a dedicated application program (hereinafter abbreviated as an application) may be transmitted to the TV receiver in synchronization with the progress of the program. In fact, this is already realized in Japan, Europe, and the like, by transmitting the commands and applications using a data broadcast band of TV broadcast signals (for example, see Patent Document 1).

On the other hand, in the United States, a data broadcast band is not provided in a TV broadcast signal, and no alternative method has been established yet. Therefore, it is not realized to execute an application in synchronization with the progress of the program.

In the United States, there are more households who watch programs via CATV and IPTV than households who watch programs by directly receiving TV broadcast waves using TV receivers. In CATV and IPTV, only the video and audio signals of a program may be extracted from a TV broadcast signal to be distributed, and therefore, even if a data broadcast band is provided in a TV broadcast signal in the United States, there is no guarantee that a data broadcast signal including data about an application is transmitted to a reception apparatus.

Further, recently, not only while a user watches programs on broadcast but also while a user listens to or watches recorded programs, videos reproduced from media contained in packages such as a DVD and a BD, and songs and motion pictures downloaded from the Internet (which will be hereinafter referred to as contents), there is a demand for executing an application in synchronization with the progress thereof.

In order to satisfy this demand, it is necessary to identify a content which is viewed, and one of such methods includes a technique called an ACR (Automatic Content Recognition) service (for example, see Patent Document 2).

The ACR service is realized by an ACR client and an ACR server. The ACR client implemented on a content playback apparatus such as a TV receiver extracts signature data from a content that the user is watching (for example, a watermark, a finger print, and the like) and notifies the signature data to the ACR server to request the ACR server to identify the content. The ACR server identifies the content that the user watches on the content playback apparatus by comparing the notified signature data with signature data of a content registered in the database in advance. Further, an application to be executed in synchronization with meta data about an identified content (hereinafter abbreviated as a synchronized application) is replied as an ACR response to the ACR client.

Then, the content playback apparatus implemented with the ACR client having received this response executes the synchronized application from a predetermined server.

### CITATION LIST

### PATENT DOCUMENT

Patent Document 1: Japanese Patent Application Laid-Open No. 2006-50237
Patent Document 2: Japanese Patent Application Laid-Open No. 2012-168801

### SUMMARY OF THE INVENTION

### PROBLEMS TO BE SOLVED BY THE INVENTION

Meanwhile, with the wide spread of CATV and IPTV in the United States as explained above, a TV receiver is regarded as a display output device of an external apparatus such as a set-top box of CATV, IPTV, and the like. Therefore, the user has hardly any opportunity to operate a remote controller of a TV receiver (hereinafter abbreviated as remote controller), and often operates a remote controller of the external apparatus. For this reason, it may not be easy for the user to execute a synchronized application on the TV receiver serving as the content playback apparatus, which is operated with the remote controller for the TV.

Therefore, in a second screen device different from the content playback apparatus implemented with the ACR client (such as a TV receiver), there may occur requests for displaying meta data about the content that the user is watching on the content playback apparatus and executing a synchronized application. In this case, examples of second screen devices include a tablet terminal, a slate PC, a smartphone, and the like.

Recently, there is a second screen device that can operate the external apparatus using a predetermined application program activated on the second screen device, and more specifically, there is a second screen device that can be used as a remote controller for the external apparatus. Therefore, it is desired to realize the above demand also from the perspective of providing the user interface on the second screen device.

In order to achieve this, it is necessary to perform cooperation between the second screen device and the content playback apparatus such as the TV receiver implemented with the ACR client, but content playback apparatuses and second screen devices are produced and sold by many manufacturers. Therefore, the use of a content playback apparatus and a second screen device made by different manufacturers in combination should be taken into consideration. In this case, standardization of protocols and API (Application Program Interface) for realizing the cooperation is urgently needed.

The present disclosure is made in view of such circumstances, and is to suggest a standard protocol for allowing a content playback apparatus, a second screen device, and the like to cooperate each other in order to use the ACR service.

### SOLUTIONS TO PROBLEMS

An information processing apparatus according to a first aspect of the present disclosure is an information processing apparatus constituting a home network system together with a terminal apparatus, including: an identification request processing unit configured to extract signature data indicating a feature of a content from the content that is reproduced, generate a query including at least the extracted signature data, transmit the query to an identification server, and receive a response, replied from the identification server in response to the query, indicating an identification result of the reproduced content; a disclosing unit configured to disclose, to the terminal apparatus, a command with which the terminal apparatus operates the identification request processing unit; and a command execution unit configured to cause the identification request unit to operate in accordance with the command from the terminal apparatus, and transfer the response to the terminal apparatus.

The disclosing unit may disclose, to the terminal apparatus, a device description directly describing a URL of the command.

The disclosing unit may directly describe the URL of the command in the device description obtained by expanding a definition of UPnP, and disclose the device description to the terminal apparatus.

The command may be WebAPI or WebSocket.

The disclosing unit may multicast-distribute a Notify message to the home network, and disclose the device description to the terminal apparatus in response to an access from the terminal apparatus on the basis of the Notify message.

The disclosing unit may disclose the device description to the terminal apparatus in accordance with M-Search from the terminal apparatus.

The response may include related meta data corresponding to the identified content.

An information processing method according to the first aspect of the present disclosure is an information processing method for information processing performed by an information processing apparatus constituting a home network system together with a terminal apparatus, the information processing apparatus including an identification request processing unit configured to extract signature data indicating a feature of a content from the content that is reproduced, generate a query including at least the extracted signature data, transmit the query to an identification server, and receive a response, replied from the identification server in response to the query, indicating an identification result of the reproduced content, the information processing method including: a disclosing step of disclosing, to the terminal apparatus, a command with which the terminal apparatus operates the identification request processing unit; and a command execution step of causing the identification request unit to operate in accordance with the command from the terminal apparatus, and transfer the response to the terminal apparatus, the disclosing step and the command execution step being carried out by the information processing apparatus.

A program according to the first aspect of the present disclosure is a program for causing a computer constituting a home network system together with a terminal apparatus to function as: an identification request processing unit configured to extract signature data indicating a feature of a content from the content that is reproduced, generate a query including at least the extracted signature data, transmit the query to an identification server, and receive a response, replied from the identification server in response to the query, indicating an identification result of the reproduced content; a disclosing unit configured to disclose, to the terminal apparatus, a command with which the terminal apparatus operates the identification request processing unit; and a command execution unit configured to cause the identification request unit to operate in accordance with the command from the terminal apparatus, and transfer the response to the terminal apparatus.

According to the first aspect of the present disclosure, the command with which the terminal apparatus operates the identification request processing unit is disclosed to the terminal apparatus, and in accordance with the command from the terminal apparatus, the identification request unit is operated, and the response is transferred to the terminal apparatus.

An information processing apparatus according to a second aspect of the present disclosure is an information processing apparatus constituting a home network system together with a content playback apparatus including an identification request processing unit configured to extract signature data indicating a feature of a content from the content that is reproduced, generate a query including at least the extracted signature data, transmit the query to an identification server, and receive a response, replied from the identification server in response to the query, indicating an identification result of the reproduced content, the information processing apparatus including: a command obtaining unit configured to obtain a command for operating the identification request processing unit of the content playback apparatus from the content playback apparatus, and receive the response transferred from the content playback apparatus by calling the command; and a synchronized application execution unit configured to obtain and execute a synchronized application, which is to be executed in accordance with progress of the content, on the basis of related meta data corresponding to the identified content, included in the received response.

The command obtaining unit may obtain a URL of the command directly described in a device description disclosed by the content playback apparatus.

The command obtaining unit may obtain a URL of the command directly described in the device description, made by expanding a definition of UPnP, disclosed by the content playback apparatus.

The command may be WebAPI or WebSocket.

The command obtaining unit may obtain the device description from the content playback apparatus on the basis of a Notify message which the content playback apparatus multicast-distributes to the home network.

The command obtaining unit may obtain the device description provided from the content playback apparatus and searched by M-Search.

The synchronized application execution unit may further present meta data of the content to a user on the basis of related meta data corresponding to the identified content included in the received response.

An information processing method according to the second aspect of the present disclosure is an information processing method for an information processing apparatus constituting a home network system together with a content playback apparatus including an identification request processing unit configured to extract signature data indicating a feature of a content from the content that is reproduced, generate a query including at least the extracted signature data, transmit the query to an identification server, and receive a response, replied from the identification server in response to the query, indicating an identification result of the reproduced content, the information processing method including: an obtaining step of obtaining, from the content playback apparatus, a command for operating the identification request processing unit of the content playback apparatus; a reception step of receiving the response transferred from the content playback apparatus by calling the command; and a synchronized application execution step of obtaining and executing a synchronized application, which is to be executed in accordance with progress of the content, on the basis of related meta data corresponding to the identified content, included in the received response, the obtaining step, the reception step, and the synchronized application execution step being carried out by the information processing apparatus.

A program according to the second aspect of the present disclosure is a program for a computer constituting a home network system together with a content playback apparatus including an identification request processing unit configured to extract signature data indicating a feature of a content from the content that is reproduced, generate a query including at least the extracted signature data, transmit the query to an identification server, and receive a response, replied from the identification server in response to the query, indicating an identification result of the reproduced content, the program causing the computer to function as: a command obtaining unit configured to obtain a command for operating the identification request processing unit of the content playback apparatus from the content playback apparatus, and receive the response transferred from the content playback apparatus by calling the command; and a synchronized application execution unit configured to obtain and execute a synchronized application, which is to be executed in accordance with progress of the content, on the basis of related meta data corresponding to the identified content, included in the received response.

According to the second aspect of the present disclosure, the command for operating the identification request processing unit of the content playback apparatus is obtained from the content playback apparatus, and the response transferred from the content playback apparatus by calling the command is received, and the synchronized application, which is to be executed in accordance with progress of the content, on the basis of related meta data corresponding to the identified content, included in the received response is obtained and executed.

An information processing method according to a third aspect of the present disclosure is an information processing method of a home network system including a terminal apparatus and a content playback apparatus including an identification request processing unit configured to extract signature data indicating a feature of a content from the content that is reproduced, generate a query including at least the extracted signature data, transmit the query to an identification server, and receive a response, replied from the identification server in response to the query, indicating an identification result of the reproduced content, the information processing method including: a disclosing step of causing the content playback apparatus to disclose a command with which the terminal apparatus operates the identification request processing unit; an obtaining calling step of causing the terminal apparatus to obtain and call the command disclosed by the content playback apparatus; a transfer step of causing the content playback apparatus to operate the identification request unit in response to calling of the command by the terminal apparatus, and transfer the response to the terminal apparatus; and a synchronized application execution step of causing the terminal apparatus to receive the transferred response, and obtain and execute a synchronized application, which is to be executed in accordance with progress of the content, on the basis of related meta data corresponding to the identified content, included in the response.

According to the third aspect of the present disclosure, the content playback apparatus discloses a command with which the terminal apparatus operates the identification request processing unit, the terminal apparatus obtains and calls the command disclosed by the content playback apparatus, the content playback apparatus operates the identification request unit in response to calling of the command by the terminal apparatus, and transfers the response to the terminal apparatus, and the terminal apparatus receives the transferred response, and obtains and executes a synchronized application, which is to be executed in accordance with progress of the content, on the basis of related meta data corresponding to the identified content, included in the response.

### EFFECTS OF THE INVENTION

According to the first aspect of the present disclosure, the command with which the terminal apparatus operates the identification request processing unit can be disclosed.

According to the second aspect of the present disclosure, the identification request processing unit of the content playback apparatus can be operated by calling the disclosed content.

According to the third aspect of the present disclosure, the content playback apparatus and the terminal apparatus constituting the home network can be caused to cooperate.

### BRIEF DESCRIPTION OF DRAWINGS

Fig. 1 is a block diagram illustrating an example of configuration of an ACR service utilizing system according to an embodiment of the present disclosure.
Fig. 2 is a block diagram illustrating an example of configuration of an ACR server.
Fig. 3 is a block diagram illustrating an example of configuration of an ACR client.
Fig. 4 is a figure illustrating a data structure of ACR reference data.
Fig. 5 is a figure illustrating a data structure of an ACR query.
Figs. 6A and 6B are figures illustrating a data structure of an ACR response.
Fig. 7 is a flowchart for explaining pre-processing of a home network system.
Fig. 8 is a flowchart for explaining pre-processing in a home network system.
Fig. 9 is a flowchart for explaining operation of an ACR service utilizing system.
Fig. 10 is a block diagram illustrating an example of configuration of a computer.

### MODE FOR CARRYING OUT THE INVENTION

Hereinafter, the best mode for carrying out the present disclosure (hereinafter referred to as embodiment) will be explained in details with reference to drawings.

### [Example of configuration of ACR service utilizing system]

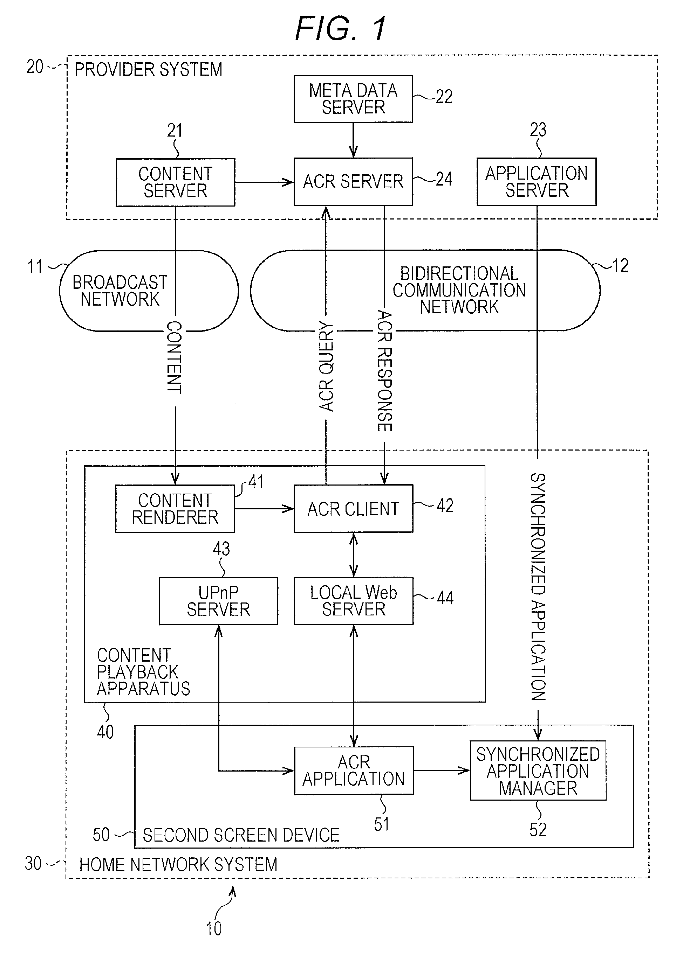

Fig. 1 illustrates an example of configuration of an ACR service utilizing system of the embodiment of the present disclosure.

This ACR service utilizing system 10 is configured to identify a content that the user is watching on a screen of a content playback apparatus 40 such as a TV receiver, and presents meta data of the content to the user with a second (2nd) screen device 50, and execute a synchronized application in accordance with the progress of the content.

In this case, the content is not limited to a program on broadcast. Examples of contents include all kinds of audio and visual contents such as programs recorded and played back by an external apparatus such as a video recorder connected to the content playback apparatus 40, videos of movies and the like played back from media provided in packages, and motion pictures, songs and the like downloaded via the Internet and the like. The contents also include commercial messages (hereinafter referred to as CMs) inserted between programs or in a program.

In order to identify a content, the ACR (Automatic Content Recognition) is used. With the ACR, a content is identified by comparing signature data indicating a feature of the content (for example, a watermark, a finger print, and the like) extracted periodically from the content that the user is watching, and signature data of contents registered in advance in a database.

The ACR service utilizing system 10 includes a provider system 20 for providing contents, synchronized application corresponding thereto, and the like, and a home network system 30 disposed at the user side to view contents and use synchronized applications. The provider system 20 and the home network system 30 are connected via a broadcast network 11 and a bidirectional communication network 12. In this case, the broadcast network 11 includes a TV broadcast network, a CATV network, an IPTV network, and the like. The bidirectional communication network 12 indicates an IP communication network a typical example of which is the Internet.

### [Explanation about provider system 20]

The provider system 20 includes a content server 21, a meta data server 22, an application server 23, and an ACR server 24.

The content server 21 broadcasts contents such as a program and a CM via the broadcast network 11. The content server 21 provides a content, which is to be broadcast, to the ACR server 24. Instead of providing the content, a content identifier and signature data extracted in advance from the content may be provided to the ACR server 24.

The meta data server 22 provides meta data corresponding to the content, which is to be broadcast from the content server 21, to the ACR server 24. The meta data includes various kinds of information about the content, identifiers indicating synchronized applications executed in accordance with the progress of the contents, data used by the synchronized applications, and the like.

The application server 23 provides an application and data used by the application via the bidirectional communication network 12 in response to a request from the second screen device 50 of the home network system 30.

The ACR server 24 previously makes, into a database, ACR reference data in which a content identifier, an application identifier, and the like are associated with signature data extracted with a predetermined sampling period from each of various contents that can be viewed on the content playback apparatus 40 and the like of the home network system 30, and holds the database. On the basis of the database of the ACR reference data, the ACR server 24 generates and replies an ACR response in accordance with an ACR query transmitted from the ACR client 42 of the content playback apparatus 40.

It should be noted that the content server 21, the meta data server 22, the application server 23, and the ACR server 24 constituting a provider system 200 may be centrally disposed at a single location, or may be arranged in a distributed manner. Alternatively, some of the content server 21, the meta data server 22, the application server 23, and the ACR server 24 may be combined and configured as necessary. Still alternatively, two or more content servers 21, two or more meta data server 22, two or more application server 23, and two or more ACR server 24 may be provided.

### [Explanation about home network system 30]

The home network system 30 includes the content playback apparatus 40 such as a TV receiver, and the second screen device 50 such as a tablet terminal, a slate PC, a smartphone, and the like. Two or more content playback apparatuses 40 and two or more second screen devices 50 may be provided in the home network system 30. The content playback apparatus 40 and the second screen device 50 are considered to be connected via, for example, wireless LAN.

The content playback apparatus 40 is configured to mainly watch contents, and includes a content renderer 41, an ACR client 42, an UPnP (Universal Plug and Play) server 43, and a local Web server 44.

The content renderer 41 obtains and branches all the contents displayed on a display of the content playback apparatus 40 (such as a TV receiver), and provides the contents to the ACR client 42. More specifically, the content renderer 41 obtains and branches not only the contents that are broadcast from the content server 21 but also the contents that are input via various kinds of input terminals (HDMI (registered trademark) terminal and the like) of the content playback apparatus 40, and provides the contents to the ACR client 42.

The ACR client 42 extracts signature data representing the feature of the content from the content that is input from the content renderer 41 with a predetermined sampling period. In this case, the extraction method of the signature data may be the same extraction method (explained later) as the ACR server 24 of the provider system 20.

The ACR client 42 generates an ACR query including the extracted signature data, and transmits the ACR query via the bidirectional communication network 12 to the ACR server 24 of the provider system 20. The ACR client 42 receives and holds an ACR response replied from the ACR server 24 in response to the transmitted ACR query.

The UPnP server 43 is configured to widely notify the details of the WebAPI (Application Program Interface) of an interface for calling the function of the content playback apparatus 40 in which the UPnP server 43 is implemented (the use of the ACR service by the ACR client 42 in this case) to another device (which is the second screen device 50 in this case) constituting the home network system 30 together with the content playback apparatus 40. More specifically, a new protocol is defined on top of a basic protocol provided by a generally-available UPnP server, and by using this, the UPnP server 43 widely notifies them (the details of which will be explained later).

The local Web server 44 allows another device (which is the second screen device 50 in this case) constituting the home network system 30 together with the content playback apparatus 40 to use the function of the content playback apparatus 40 in which the UPnP server 43 is implemented (the use of the ACR service by the ACR client 42 in this case in this case). More specifically, in response to a call of an API notified by the UPnP server 43, the ACR client 42 is controlled to use the ACR service, and transfers an ACR response replied from the ACR server 24 to the second screen device 50.

In the present embodiment, the second screen device 50 is configured to mainly present meta data of contents viewed on the content playback apparatus 40 to the user, and execute a synchronized application in accordance with the progress of the content, and includes an ACR application 51 and a synchronized application manager 52.

The ACR application 51 is installed to the second screen device 50 in advance, and the ACR application 51 cooperates with the content playback apparatus 40 and is activated when the ACR service is used. The ACR application 51 obtains an API for reading the function using the ACR service from the UPnP server 43, and the ACR application 51 calls the API to obtain, via the local Web server 44, the ACR response from the ACR server 24 that is received by the ACR client 42. Further, the ACR application 51 analyzes the obtained ACR response, and notifies the analysis result to the synchronized application manager 52.

In accordance with the notification of ACR application 51, the synchronized application manager 52 is configured to present the meta data included in the ACR response to the user, and obtain the synchronized application corresponding to the content that the user is watching on the content playback apparatus 40 via the bidirectional communication network 12 from the application server 23, and execute the synchronized application. It should be noted that the synchronized application manager 52 may be a Web browser.

### [Example of detailed configuration of ACR server 24]

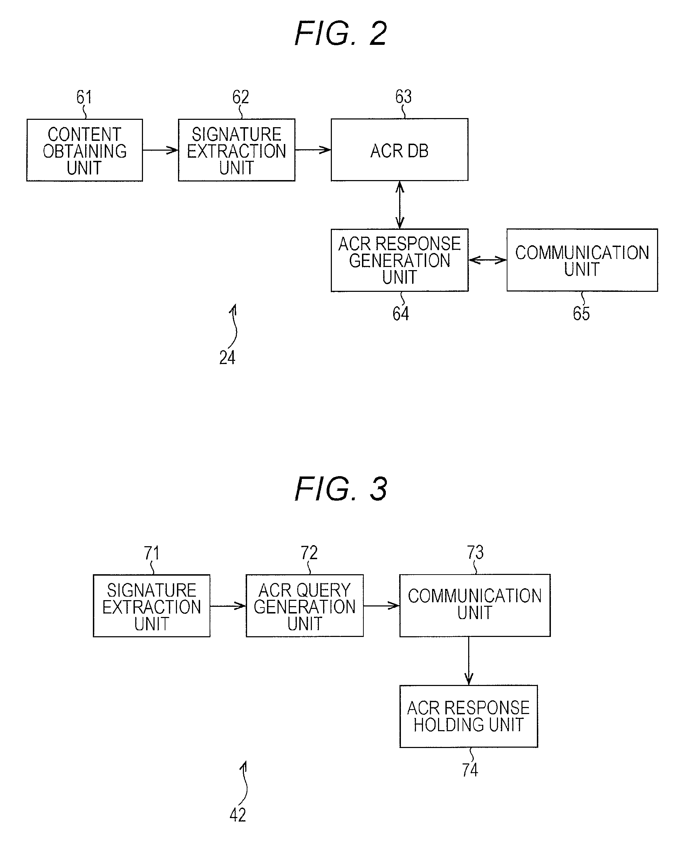

Fig. 2 illustrates an example of detailed configuration of the ACR server 24 included in the provider system 20.

The ACR server 24 includes a content obtaining unit 61, a signature extraction unit 62, an ACR database (DB) 63, an ACR response generation unit 64, and a communication unit 65.

The content obtaining unit 61 obtains, from the content server 21 and the like, contents which are to be broadcast by the content server 21 via the broadcast network 11, and various kinds of contents that can be watched on the content playback apparatus 40, and provides the obtained content to the signature extraction unit 62. The signature extraction unit 62 extracts the signature data indicating the feature from the content provided from the content obtaining unit 61 by using a predetermined extraction method with a predetermined sampling period, and outputs the signature data to the ACR database 63.

The extraction method of the signature data performed by the signature extraction unit 62 may be any method already available. For example, a watermark embedded in a content in advance may be extracted to be adopted as signature data, or a finger print may be calculated to be adopted as signature data.

When a finger print is used as signature data, the same signature data can be obtained before and after conversion even if the resolution, the aspect ratio, the bit rate, the encoding format, and the like of the content is converted. Therefore, the identification precision can be improved when the content is identified on the basis of the signature data.

When there are multiple ACR servers 24, it is not necessary to unify the extraction method of the signature data performed by each of the signature extraction units 62, and any given extraction method can be employed by each ACR server 24.

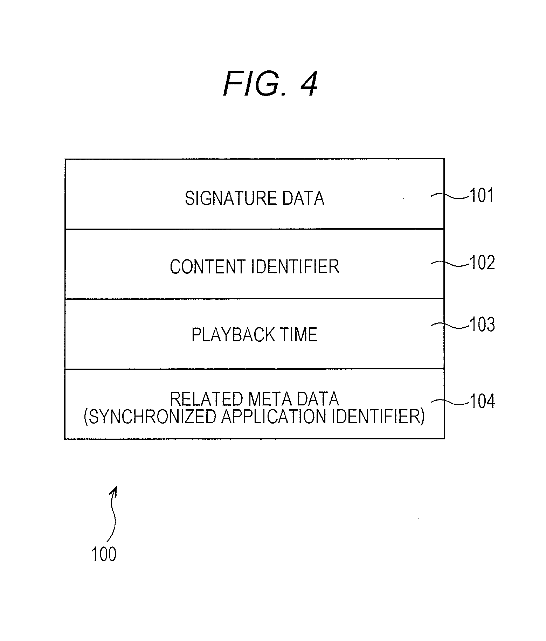

The ACR database 63 generates and stores ACR reference data in which the content identifier and the like indicating the content of the source of extraction is associated with each piece of signature data which are input from the signature extraction unit 62. Therefore, the signature data extracted from the content are made into a database. The data structure of the ACR reference data will be explained later with reference to Fig. 4.

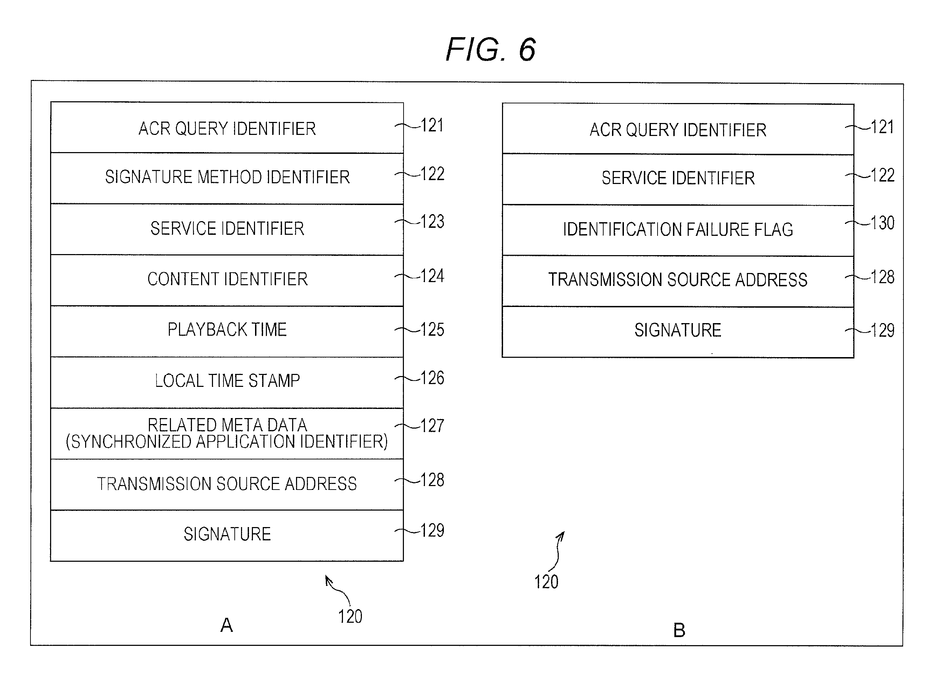

The ACR response generation unit 64 refers to the ACR database 63 to identify the content of the source of extraction of the signature data included in the ACR query transmitted from the ACR client 42. Further, the ACR response generation unit 64 generates an ACR response including the content identifier, related meta data, and the like serving as an identification result. The data structure of the ACR response will be explained later with reference to Fig. 6. The communication unit 65 receives the ACR query transmitted from the ACR client 42, outputs the ACR query to the ACR response generation unit 64, and transmits the ACR response generated by the ACR response generation unit 64 to the ACR client 42.

### [Example of detailed configuration of ACR client 42]

Fig. 3 illustrates an example of detailed configuration of the ACR client 42 provided in the content playback apparatus 40.

The ACR client 42 includes a signature extraction unit 71, an ACR query generation unit 72, a communication unit 73, and an ACR response holding unit 74.

The signature extraction unit 71 extracts the signature data indicating the feature of the content from the content branched and provided from the content renderer 41 with a predetermined sampling period, and outputs the feature to the ACR query generation unit 72. It should be noted that the extraction method of the signature data performed by the signature extraction unit 71 is common to that of the signature extraction unit 62 of the ACR server 24 used.

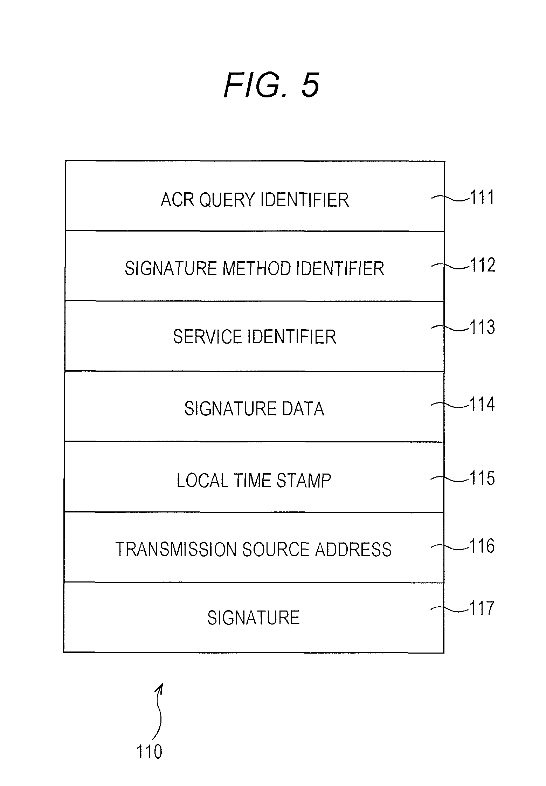

The ACR query generation unit 72 generates an ACR query for requesting the ACR server 24 to send identification of the content including the signature data extracted by the signature extraction unit 71. The data structure of the ACR query will be explained later with reference to Fig. 5.

The communication unit 73 transmits the ACR query generated by the ACR query generation unit 72 to the ACR server 24, receives the ACR response replied from the ACR server 24 and outputs the ACR response to the ACR response holding unit 74. The ACR response holding unit 74 holds the ACR response received by the communication unit 73. The held ACR response is transferred by the local Web server 44 to the second screen device 50.

### [Data structure of ACR reference data]

Fig. 4 illustrates a data structure of ACR reference data made into a database in the ACR database 63 of the ACR server 24.

In an ACR reference data 100, a content identifier 102, a playback time 103, and related meta data 104 are associated with each piece of signature data 101 extracted from the contents with a predetermined period.

The signature data 101 are extracted from the content by the signature extraction unit 62. The content identifier 102 is information indicating the content of the source of extraction of the signature data 101. The playback time 103 indicates progression timing of the content when the signature data 101 are extracted from the content indicated by the content identifier 102, and is represented by an elapsed time from the head of the content.

The related meta data 104 include meta data of a content indicated by the content identifier 102, an application identifier indicating a synchronized application to be executed in accordance with progression timing of the content indicated by the playback time 103 for the content, and various kinds of data used by the synchronized application executed.

It should be noted that the related meta data 104 may involve different contents in accordance with the progression timing of the content indicated by the playback time 103.

### [Data structure of ACR query]

Fig. 5 illustrates a data structure of an ACR query generated by the ACR query generation unit 72 of the ACR client 42.

The ACR query 110 includes an ACR query identifier 111, a signature method identifier 112, a service identifier 113, a signature data 114, a local time stamp 115, a transmission source address 116, and a signature 117.

The ACR query identifier 111 is information for uniquely identifying the ACR query 110. The signature method identifier 112 is information for identifying the extraction method used to extract the signature data 114. The service identifier 113 is information for selecting an ACR server 24 to which the ACR query 110 is transmitted and from which an ACR response is received in a case where there are multiple ACR servers 24.

The signature data 114 are what have been extracted from the content by the signature extraction unit 71 of the ACR client 42. The local time stamp 115 indicates a point in time when the signature data 114 was extracted from the content, and is represented by a time indicated by the local system clock in the content playback apparatus 40.

The transmission source address 116 is an address in the bidirectional communication network 12 of the ACR client 42 transmitting the ACR query 110, and is used as information indicating the reply destination of the ACR response generated by the ACR server 24 in response to the ACR query 110. The signature 117 is to prevent the ACR query 110 from being tampered. It should be noted that the entire ACR query 110 may also be encrypted and transmitted.

### [Data structure of ACR response]

Figs. 6A and 6B illustrate a data structure of an ACR response generated by the ACR response generation unit 64 of the ACR server 24.

The ACR response 120 has a data structure as shown in Fig. 6A or Fig. 6B. Fig. 6A is a data structure of the ACR response 120 in a case where the content of the source of extraction of the signature data 114 included in the ACR query 110 can be identified, i.e., a case where the content that the user is watching on the content playback apparatus 40 can be identified. Fig. 6B is a data structure of the ACR response 120 in a case where the content cannot be identified.

In a case where the content that the user is watching on the content playback apparatus 40 can be identified, the ACR response 120 (Fig. 6A) includes an ACR query identifier 121, a signature method identifier 122, a service identifier 123, a content identifier 124, a playback time 125, a local time stamp 126, related meta data 127, a transmission source address 128, and a signature 129.

On the other hand, in a case where the content that the user is watching on the content playback apparatus 40 cannot be identified, the ACR response 120 (Fig. 6B) includes an ACR query identifier 121, a service identifier 122, a transmission source address 128, a signature 129, and an identification failure flag 130.

The ACR query identifier 121, the signature method identifier 122, the service identifier 123, and the local time stamp 126 identify the ACR query 110 requesting to transmit the ACR response 120, and are described by citing the ACR query identifier 111, the signature method identifier 112, the service identifier 113, and the local time stamp 115 of the ACR query 110.

The content identifier 124, the playback time 125, and the related meta data 127 indicate the identification result of the content, and are described by citing the content identifier 102, the playback time 103, and the related meta data 104 of the corresponding ACR reference data 100.

The transmission source address 128 is an address in the bidirectional communication network 12 of the ACR server 24 transmitting the ACR response 120. The signature 129 is to prevent the ACR response 120 from being tampered. It should be noted that the entire ACR response 120 may be encrypted and transmitted, so that the ACR response 120 is prevented from being tampered.

The identification failure flag 130 is a flag indicating that the ACR server 24 cannot identify the content of the source of extraction of the signature data 114 included in the ACR query 110 from the ACR client 42, and more specifically, is a flag indicating that the ACR server 24 cannot identify the content that the user is watching on the content playback apparatus 40.

### [Processing of home network system 30 of ACR service utilizing system 10]

Subsequently, processing in which the second screen device 50 forming the home network system 30 obtains a device description which is information about the function that can be used by the content playback apparatus 40 (which means the ACR service in the present embodiment) will be explained.

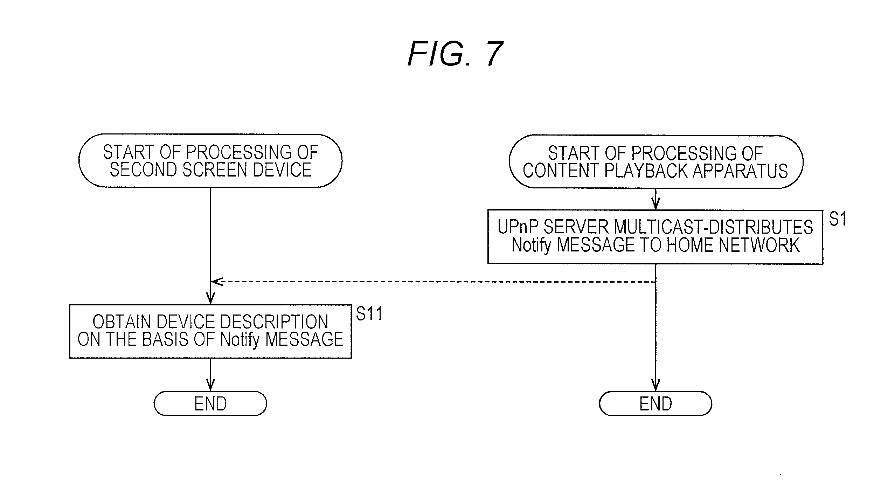

Fig. 7 is a flowchart for explaining processing in a case where the content playback apparatus 40 is connected to the network system 30 (including the time when the content playback apparatus 40 is activated) while the ACR application 51 is already activated by the second screen device 50.

In step S1, the UPnP server 43 of the content playback apparatus 40 multicast-distributes a Notify message defined by UPnP as shown below to the home network system 30. The Notify message is transferred by UDP/IP, and in this case, the Notify message is received by the ACR application 51 of the second screen device 50.
NOTIFY * HTTP/1.1...LOCATION "http://192.168.0.4:55500"...

The LOCATION header of the Notify message describes an acquisition destination address of the device description of the content playback apparatus 40. Accordingly, in step S11, in the second screen device 50, the ACR application 51 obtains the device description of the acquisition destination address by HTTP GET.

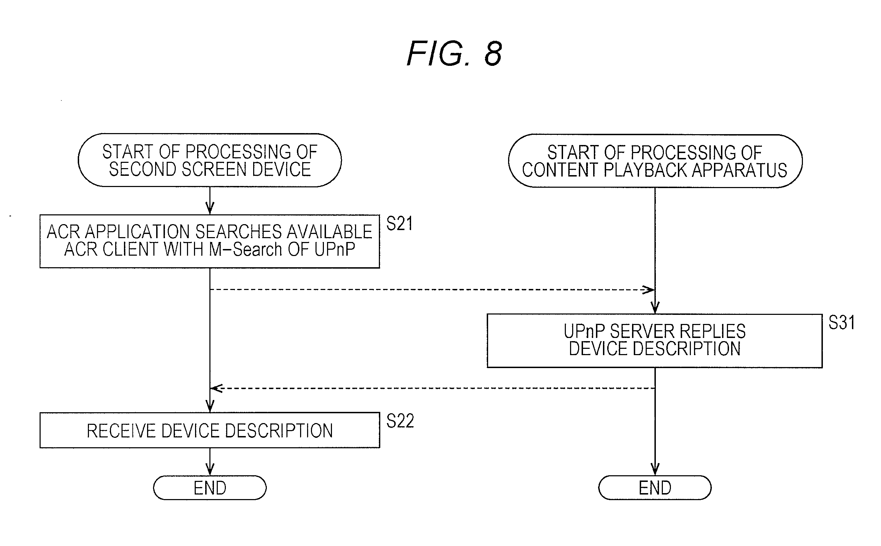

Subsequently, Fig. 8 is a flowchart for explaining processing in a case where the content playback apparatus 40 is first connected to the network system 30 and activated and then the ACR application 51 is activated on the second screen device 50.

In this case, the UPnP server 43 of the content playback apparatus 40 had already multicast-distributed the Notify message, and therefore, the ACR application 51 of the second screen device 50 cannot receive the Notify message. For this reason, in step S21, the ACR application 51 searches an available ACR client with M-Search defined in the UPnP.

In response to the M-Search, the UPnP server 43 of the content playback apparatus 40 replies the device description in step S31. In step S22, the ACR application 51 receives the device description.

### [Example of device description]

Herein, an example of device description will be explained. In the device description, for example, an XML file is used.

A first example of a device description will be shown below.

```
        First example of device description
        <root xmlns="urn:schemas-upnp-org:device-1-0">
        ...
                <serviceList>
                        <service>
        <serviceType>"urn:abc:service:ACRClient.v1"</servic
        eType> (meaning ACR client service)
        <serviceId>"urn:UPnP:serviceId:1234"</serviceId>
 (meaning service ID of ACR client service)
                                <SCPDURL></SCPDURL>
                                <controlURL>"
                                http://192.168.0.4:55500/getACRResponse"</controlURL>
                                ...
                        </service>
                </serviceList>
        ...
        </root>
```

The acquisition destination address of the service description describing the ACR service that can be used by the ACR client 42 is described in the <SCPDURL> element of the device description defined in the already-existing generally-available UPnP, and the ACR application 51 obtains the service description from the acquisition destination by HTTP GET. Further, the ACR application 51 calls actions (transmission of the ACR query and the transfer of the ACR response in this case) by sending a message of an action to the URL described in the <controlURL> element by using the SOAP defined in the UPnP.

However, in the present embodiment, the device description defined in the UPnP as described above is expanded, and the WebAPI for calling the action is directly described in the device description, so that the action can be called with a less amount of procedure.

More specifically, like the first example shown above, for example, nothing is described in the <SCPDURL> element to leave the <SCPDURL> element blank, or a predetermined dummy character string is described therein, and the server-side script URL of the WebAPI (http://192.168.0.4:55500/getACRResponse in the case of the first example) is directly described in the <controlURL> element.

Alternatively, like the second example as shown below, a <WebAPIURL> element that is not defined in the UPnP may be newly provided, and the server-side script URL of the WebAPI may be directly described in the <WebAPIURL> element.

```
        Second example of device description
        <root xmlns="urn:schemas-upnp-org:device-1-0">
        ...
        <serviceList>
                <service>
        <serviceType>"urn:abc:service:ACRClient.vl"</servic
 eType> (meaning ACR client service)
        <serviceId>"urn:UPnP:serviceId:1234"</serviceId>
 (meaning service ID of ACR client service)
                        <SCPDURL></SCPDURL>
                        <controlURL></controlURL>
                        <WebAPIURL>"
                        http://192.168.0.4:55500/getACRResponse"</controlURL>
                ...
                </service>
        </serviceList>
```

The ACR application 51 of the second screen device 50 having obtained the device description of the first or second example can execute the action by calling, using HTTP GET, a getACRResponse which is the server-side script url of the WebAPI described in the <controlURL> element or the <WebAPIURL> of the device description. More specifically, when not activated, the ACR application 51 is activated, and then, the ACR query 110 is transmitted to the ACR client 42 of the content playback apparatus 40, and the ACR response 120 replied in response thereto can be transferred. It should be noted that the transfer of the ACR response 120 is performed while, for example, JSON is described as follows in the body of the HTTP response returned in reply to the WebAPI.
HTTP/1.1 200 OK
Content-Type: application/json; charset=utf-8
...
"Content of ACR response encoded by JSON"

While the transaction using the WebAPI is repeatedly performed through polling while the user watches the content. Then, the related meta data 127 and the like in the ACR response 120 converted every moment in accordance with the progress of the content are presented to the user with the second screen device 50.

As described above, when the device description is expanded and standardized, the content playback apparatus 40 and the second screen device 50 manufactured and sold by different manufacturers can operate in cooperation in a short time.

Instead of using the WebAPI, a WebSocket which is standardized by IETF (Internet Engineering Task Force) and the like may be used. When the WebSocket is used, a WebSocket server is provided in a local Web server 44 (or the ACR client 42 or the second screen device 50), and both of the ACR application 51 and the ACR client 42 issue a session (TCP connection) establishing request via the WebSocket server to establish a session, and on this session, the ACR response 120 is transferred by JSON explained above.

In this case, when the ACR client 42 receives a new ACR response 120 from the ACR server 24, it is immediately transferred to the ACR application 51 via the established session. Therefore, this eliminates the necessity of polling which was necessary when the WebAPI was used, and the ACR response 120 can be immediately transferred without depending on the polling period.

### [Operation with ACR service utilizing system 10]

Subsequently, operation performed by the ACR service utilizing system 10 will be explained.

In the operation explained below, it is assumed that, in the home network system 30, the ACR application 51 of the second screen device 50 had already obtained the device description from the UPnP server 43 of the content playback apparatus 40.

In the ACR server 24 of the provider system 20, it is assumed that the ACR reference data 100 corresponding to various contents that may be watched on the content playback apparatus 40 are generated and registered to the ACR database 63.

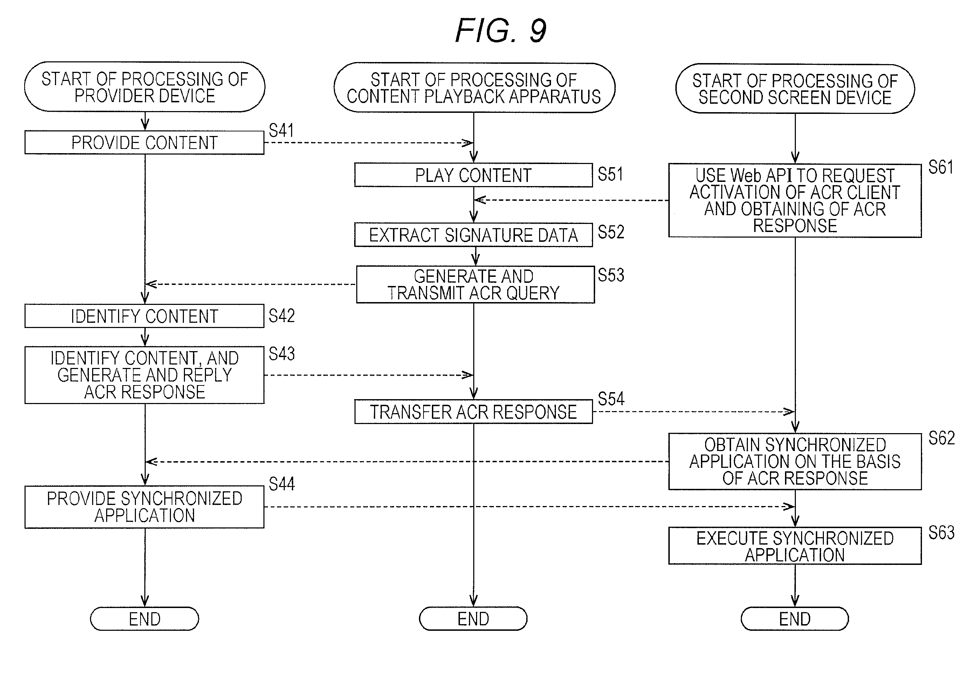

Fig. 9 is a flowchart for explaining operation performed by the ACR service utilizing system 10.

In step S41, the content server 21 of the provider system 20 starts transmission of the content via the broadcast network 11.

On the other hand, in the home network system 30, in step S51, the content playback apparatus 40 starts reception and playback of the content. In this case, in step S61, when the ACR application 51 of the second screen device 50 demands the action of the ACR client 42 by calling the WebAPI, operation of the ACR client 42 and the like is started according to the control given by the local Web server 44 in response thereto.

More specifically, in step S52, the content renderer 41 obtains and branches the content that the user is watching, and outputs the content to the ACR client 42. The signature extraction unit 71 of the ACR client 42 extracts the signature data 114 from the content, and outputs the signature data 114 to the ACR query generation unit 72. In step S53, the ACR query generation unit 72 generates an ACR query 110 including the signature data 114, and the communication unit 73 transmits the generated ACR query 110 to the ACR server 24.

In the ACR server 24 having received the ACR query 110 from the ACR client 42, the ACR response generation unit 64 looks up the ACR database 63 to identify the content corresponding to the signature data 114 included in the received ACR query 110 in step S42. Further, in step S43, the ACR response generation unit 64 generates an ACR response 120 according to the identification result of the content, and the communication unit 65 replies the generated ACR response 120 to the ACR client 42.

In step S54, the ACR client 42 having received the ACR response 120 from the ACR server 24 provides the received ACR response 120 to the local Web server 44. The local Web server 44 transfers the ACR response 120 to the ACR application 51 of the second screen device 50. In step S62, the ACR application 51 having received the transferred ACR response 120 analyzes the related meta data 127 included in the ACR response 120, and allows the synchronized application manager 52 to obtain the synchronized application which is to be executed in accordance with the progress of the content that the user is watching.

In step S63, the synchronized application manager 52 obtains and executes the synchronized application that the application server 23 provides as the processing of step S44. When the synchronized application has already been obtained, the acquisition of the synchronized application may be omitted. When the synchronized application has already been activated, the activation of the synchronized application may be omitted. Further, information included in the related meta data 127 may be presented to the user without executing the synchronized application.

The processing in steps S41 to S44, the processing in steps S51 to S54, and the processing in steps S61 to 63 explained above are repeatedly executed while the user watches the content. Therefore, the synchronized application can be caused to operate in accordance with the progress of the content that the user is watching.

Meanwhile, each of the content server 21 to the ACR server 24 of the provider system 20 and the content playback apparatus 40 and the second screen device 30 of the home network system 30 executing the series of processing explained above may be constituted by hardware or may be achieved by causing a computer to execute software. The computer includes a computer incorporated into dedicated hardware and, for example, a general-purpose personal computer capable of executing various kinds of functions by installing various kinds of programs.

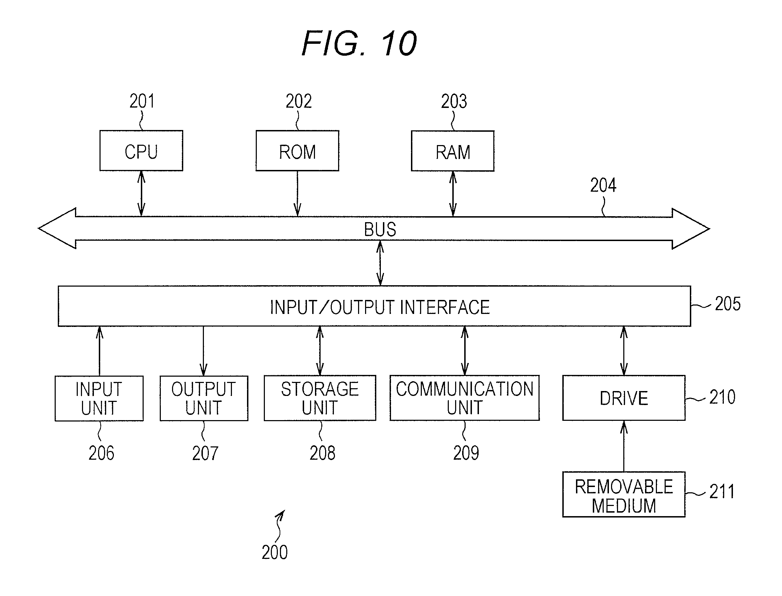

Fig. 10 is a block diagram illustrating an example of a configuration of hardware of the computer explained above.

In this computer 200, a CPU (Central Processing Unit) 201, a ROM (Read Only Memory) 202, and a RAM (Random Access Memory) 203 are connected with each other by a bus 204.

The bus 204 is further connected with an input/output interface 205. The input/output interface 205 is connected with an input unit 206, an output unit 207, a storage unit 208, a communication unit 209, and a drive 220.

The input unit 206 is constituted by a keyboard, a mouse, a microphone, and the like. The output unit 207 is constituted by a display, a speaker, and the like. The storage unit 208 is constituted by a hard disk, a nonvolatile memory, and the like. The communication unit 209 is constituted by a network interface and the like. The drive 220 drives a removable medium 211 such as a magnetic disk, an optical disk, a magneto-optical disk, and a semiconductor memory.

In the computer 200 configured as described above, the CPU 201 performs the above series of processing by, e.g., executing the program stored in the storage unit 208 by loading the program to the RAM 203 via the input/output interface 205 and the bus 204.

The program executed by the computer 200 (CPU 201) may be provided as being recorded to the removable medium 211 serving as, for example, a medium provided as a package. Further, the program can be provided via wired or wireless transmission media such as local area network, the Internet, and digital satellite broadcasting.

In the computer 200, the program can be installed to the storage unit 208 via the input/output interface 205 by loading the removable medium 211 to the drive 220. Further, the program can be installed to the storage unit 208 by receiving the program with the communication unit 209 via wired or wireless transmission media. Also, the program can be installed to the ROM 202 and the storage unit 208 beforehand.

It should be noted that the program executed by the computer 200 may be a program with which processing is performed in time sequence according to the order explained in this specification, or may be a program with which processing is performed in parallel or with necessary timing, e.g., upon call.

The embodiment of the present disclosure is not limited to the above embodiment. The embodiment of the present disclosure can be changed in various manners without deviating from the gist of the present disclosure.

### REFERENCE SIGNS LIST

- 10: ACR service utilizing system
- 11: Broadcast network
- 12: Bidirectional communication network
- 20: Provider system
- 21: Content server
- 22: Meta data server
- 23: Application server
- 24: ACR server
- 30: Home system server
- 40: Content playback apparatus
- 41: Content renderer
- 42: ACR client
- 43: UPnP server
- 44: Local Web server
- 50: Second screen device
- 51: ACR application
- 52: Synchronized application manager
- 61: Content obtaining unit
- 62: Signature extraction unit
- 63: ACR database
- 64: ACR response generation unit
- 65: Communication unit
- 71: Signature extraction unit
- 72: ACR query generation unit
- 73: Communication unit
- 74: ACR response holding unit
- 100: ACR reference data
- 110: ACR query
- 120: ACR response
- 200: Computer
- 201: CPU

## Claims

1. An information processing apparatus constituting a home network system together with a terminal apparatus, comprising:
an identification request processing unit configured to extract signature data indicating a feature of a content from the content that is reproduced, generate a query including at least the extracted signature data, transmit the query to an identification server, and receive a response, replied from the identification server in response to the query, indicating an identification result of the reproduced content;
a disclosing unit configured to disclose, to the terminal apparatus, a command with which the terminal apparatus operates the identification request processing unit; and
a command execution unit configured to cause the identification request unit to operate in accordance with the command from the terminal apparatus, and transfer the response to the terminal apparatus.

2. The information processing apparatus according to claim 1, wherein the disclosing unit discloses, to the terminal apparatus, a device description directly describing a URL of the command.

3. The information processing apparatus according to claim 2, wherein the disclosing unit directly describes the URL of the command in the device description obtained by expanding a definition of UPnP, and discloses the device description to the terminal apparatus.

4. The information processing apparatus according to claim 2, wherein the command is WebAPI or WebSocket.

5. The information processing apparatus according to claim 2, wherein the disclosing unit multicast-distributes a Notify message to the home network, and discloses the device description to the terminal apparatus in response to an access from the terminal apparatus on the basis of the Notify message.

6. The information processing apparatus according to claim 2, wherein the disclosing unit discloses the device description to the terminal apparatus in accordance with M-Search from the terminal apparatus.

7. The information processing apparatus according to claim 2, wherein the response includes related meta data corresponding to the identified content.

8. An information processing method for information processing performed by an information processing apparatus constituting a home network system together with a terminal apparatus,
the information processing apparatus including an identification request processing unit configured to extract signature data indicating a feature of a content from the content that is reproduced, generate a query including at least the extracted signature data, transmit the query to an identification server, and receive a response, replied from the identification server in response to the query, indicating an identification result of the reproduced content,
the information processing method comprising:
a disclosing step of disclosing, to the terminal apparatus, a command with which the terminal apparatus operates the identification request processing unit; and
a command execution step of causing the identification request unit to operate in accordance with the command from the terminal apparatus, and transfer the response to the terminal apparatus,
the disclosing step and the command execution step being carried out by the information processing apparatus.

9. A program for causing a computer constituting a home network system together with a terminal apparatus to function as:
an identification request processing unit configured to extract signature data indicating a feature of a content from the content that is reproduced, generate a query including at least the extracted signature data, transmit the query to an identification server, and receive a response, replied from the identification server in response to the query, indicating an identification result of the reproduced content;
a disclosing unit configured to disclose, to the terminal apparatus, a command with which the terminal apparatus operates the identification request processing unit; and
a command execution unit configured to cause the identification request unit to operate in accordance with the command from the terminal apparatus, and transfer the response to the terminal apparatus.

10. An information processing apparatus constituting a home network system together with a content playback apparatus including an identification request processing unit configured to extract signature data indicating a feature of a content from the content that is reproduced, generate a query including at least the extracted signature data, transmit the query to an identification server, and receive a response, replied from the identification server in response to the query, indicating an identification result of the reproduced content,
the information processing apparatus comprising:
a command obtaining unit configured to obtain a command for operating the identification request processing unit of the content playback apparatus from the content playback apparatus, and receive the response transferred from the content playback apparatus by calling the command; and
a synchronized application execution unit configured to obtain and execute a synchronized application, which is to be executed in accordance with progress of the content, on the basis of related meta data corresponding to the identified content, included in the received response.

11. The information processing apparatus according to claim 10, wherein the command obtaining unit configured to obtain a URL of the command directly described in a device description disclosed by the content playback apparatus.

12. The information processing apparatus according to claim 11, wherein the command obtaining unit obtains a URL of the command directly described in the device description, made by expanding a definition of UPnP, disclosed by the content playback apparatus.

13. The information processing apparatus according to claim 11, wherein the command is WebAPI or WebSocket.

14. The information processing apparatus according to claim 11, wherein the command obtaining unit obtains the device description from the content playback apparatus on the basis of a Notify message which the content playback apparatus multicast-distributes to the home network.

15. The information processing apparatus according to claim 11, wherein the command obtaining unit obtains the device description provided from the content playback apparatus and searched by M-Search.

16. The information processing apparatus according to claim 11, wherein the synchronized application execution unit further presents meta data of the content to a user on the basis of related meta data corresponding to the identified content included in the received response.

17. An information processing method for an information processing apparatus constituting a home network system together with a content playback apparatus including an identification request processing unit configured to extract signature data indicating a feature of a content from the content that is reproduced, generate a query including at least the extracted signature data, transmit the query to an identification server, and receive a response, replied from the identification server in response to the query, indicating an identification result of the reproduced content,
the information processing method comprising:
an obtaining step of obtaining, from the content playback apparatus, a command for operating the identification request processing unit of the content playback apparatus;
a reception step of receiving the response transferred from the content playback apparatus by calling the command; and
a synchronized application execution step of obtaining and executing a synchronized application, which is to be executed in accordance with progress of the content, on the basis of related meta data corresponding to the identified content, included in the received response,
the obtaining step, the reception step, and the synchronized application execution step being carried out by the information processing apparatus.

18. A program for a computer constituting a home network system together with a content playback apparatus including an identification request processing unit configured to extract signature data indicating a feature of a content from the content that is reproduced, generate a query including at least the extracted signature data, transmit the query to an identification server, and receive a response, replied from the identification server in response to the query, indicating an identification result of the reproduced content,
the program causing the computer to function as:
a command obtaining unit configured to obtain a command for operating the identification request processing unit of the content playback apparatus from the content playback apparatus, and receive the response transferred from the content playback apparatus by calling the command; and
a synchronized application execution unit configured to obtain and execute a synchronized application, which is to be executed in accordance with progress of the content, on the basis of related meta data corresponding to the identified content, included in the received response.

19. An information processing method of a home network system including a terminal apparatus and a content playback apparatus including an identification request processing unit configured to extract signature data indicating a feature of a content from the content that is reproduced, generate a query including at least the extracted signature data, transmit the query to an identification server, and receive a response, replied from the identification server in response to the query, indicating an identification result of the reproduced content,
the information processing method comprising:
a disclosing step of causing the content playback apparatus to disclose a command with which the terminal apparatus operates the identification request processing unit;
an obtaining calling step of causing the terminal apparatus to obtain and call the command disclosed by the content playback apparatus;
a transfer step of causing the content playback apparatus to operate the identification request unit in response to calling of the command by the terminal apparatus, and transfer the response to the terminal apparatus; and
a synchronized application execution step of causing the terminal apparatus to receive the transferred response, and obtain and execute a synchronized application, which is to be executed in accordance with progress of the content, on the basis of related meta data corresponding to the identified content, included in the response.
